Europäisches Patentamt

European Patent Office

Office européen des brevets

(19)

(11) Numéro de publication : **0 138 717**
**B1**

(12) **FASCICULE DE BREVET EUROPÉEN**

(45) Date de publication du fascicule du brevet :
**10.02.88**

(21) Numéro de dépôt : **84402071.9**

(22) Date de dépôt : **15.10.84**

(51) Int. Cl.⁴ : **H 04 L 11/16**

(54) **Système de multiplexage numérique temporel asynchrone à bus distribué.**

(30) Priorité : **14.10.83 FR 8316365**

(43) Date de publication de la demande :
**24.04.85 Bulletin 85/17**

(45) Mention de la délivrance du brevet :
**10.02.88 Bulletin 88/06**

(84) Etats contractants désignés :
**BE CH DE GB IT LI NL SE**

(56) Documents cités :
**FR-A- 2 406 916**
**US-A- 3 851 104**
**SOFTWARE & MICROSYSTEMS, vol. 1, no. 3, avril 1982, pages 69-73, Camberley, Surrey, GB; F. HAL-SALL et al.: "Prototype X25 exchange for use in local area networks"**

(73) Titulaire : **Chomel, Denis**
**Rue des Sept Tournants**
**F-22300 Lannion (FR)**

**Devault, Michel**
**22, rue de Bourgogne**
**F-22300 Lannion (FR)**

**Le Bris, Hervé**
**Kerenoc**
**F-22560 Pleumeur Bodou (FR)**

**Rouaud, Yvon**
**Les Fontaines A.33**
**F-22300 Lannion (FR)**

(72) Inventeur : **Chomel, Denis**
**Rue des Sept Tournants**
**F-22300 Lannion (FR)**
Inventeur : **Devault, Michel**
**22, rue de Bourgogne**
**F-22300 Lannion (FR)**
Inventeur : **Le Bris, Hervé**
**Kerenoc**
**F-22560 Pleumeur Bodou (FR)**
Inventeur : **Rouaud, Yvon**
**Les Fontaines A.33**
**F-22300 Lannion (FR)**

(74) Mandataire : **Martinet & Lapoux**
**62, rue des Mathurins**
**F-75008 Paris (FR)**

## Description

La présente invention concerne un système de multiplexage numérique temporel asynchrone à bus distribué.

Le mode de multiplexage d'un système de multiplexage numérique temporel asynchrone est intermédiaire entre le mode paquet et le mode circuit. Dans un système temporel asynchrone, les voies numériques provenant de différentes sources sont multiplexées dans le temps après avoir été découpées en paquets, comme selon la technique traditionnelle en mode paquet. Chaque paquet est constitué d'une étiquette identifiant la voie numérique de source et d'un bloc d'information provenant de la source. Par ailleurs, comme selon la technique de multiplexage en mode circuit, chaque paquet a un nombre de bits constant et les paquets sont multiplexés dans des intervalles temporels de trame ; aucun contrôle d'erreur ou de flux n'est effectué. La technique de multiplexage temporel asynchrone est particulièrement destinée à la conception d'un réseau numérique à intégration de services au sujet duquel peut être cité l'article de Coudreuse Jean-Pierre, intitulé « Les réseaux temporels asynchrones : du transfert de données à l'image animée », paru dans l'Echo des Recherches, n° 112, 2e trimestre 1983, pages 33 à 48.

Plus particulièrement, l'invention a trait à un système de multiplexage temporel asynchrone pour concentrer et multiplexer des voies numériques de sources ayant des débits différents. Ces sources sont raccordées le long d'un bus d'interconnexion, comme décrit très brièvement aux pages 47 et 48 de l'article précité, sous le titre « PRELUDE : les bases d'un réseau expérimental ».

La présente invention a ainsi pour but de fournir un système de multiplexage numérique temporel asynchrone à bus distribué dans lequel l'introduction d'un paquet provenant d'une source active ne requiert pas une demande d'accès provenant de la source afin d'éviter un échange de signaux entre la source et un concentrateur de paquets pour chaque transmission de paquet, et corollairement, afin de permettre un fonctionnement à haut débit du bus transmettant les paquets. Le mode de multiplexage des paquets n'exploite pas les périodes d'inactivité des sources pour en multiplexer un plus grand nombre.

A cette fin, un système de multiplexage numérique temporel asynchrone comprenant un premier bus unidirectionnel ayant un débit prédéterminé D pour transmettre des paquets incluant chacun une étiquette de source ayant e bits et un bloc ayant b bits de source, plusieurs sources délivrant respectivement des signaux numériques ayant des débits différents compris entre un débit minimal $d_m$ et un débit maximal $d_M$ inférieur au débit prédéterminé D du premier bus, et plusieurs moyens d'accès raccordant les sources le long du premier bus pour introduire des paquets dans le premier bus à partir des sources respectivement, est caractérisé en ce qu'il comprend des moyens d'allocation localisés à l'extrémité de réception du premier bus pour constituer des trames d'étiquettes identifiant des sources, chaque trame ayant une durée T égale à $b/d_m$ et étant partagée en un nombre N d'intervalles temporels égal à $d_M/d_m$, chaque intervalle temporel ayant une durée $\theta$ égale à $b/d_M$ et incluant une étiquette de source, chaque étiquette d'une même source ayant un débit $d_i$ étant répétée périodiquement ou non dans la trame T un nombre de fois $n_i$ tel que $n_i = d_i/d_m$ lorsque le rapport $d_i/d_m$ est un nombre entier ou tel que $n_i = 1 +$ partie entière de $(d_i/d_m)$ lorsque le rapport $d_i/d_m$ n'est pas un nombre entier, en ce que les trames d'étiquettes sont transmises par les moyens d'allocation dans un second bus unidirectionnel distribué à tous les moyens d'accès, et en ce que le moyen d'accès de chaque source transmet un paquet dans le premier bus chaque fois qu'un bloc de b bits provenant de la source est reçu et qu'une étiquette assignée à la source est détectée dans le second bus après la réception du bloc.

L'invention sera mieux comprise à la lecture de la description suivante d'une réalisation préférée de l'invention en référence aux dessins correspondants annexés dans lesquels :

— la Fig. 1 est un bloc diagramme schématique du système de multiplexage numérique temporel asynchrone à bus distribué selon l'invention ;

— la Fig. 2 montre la structure de trame d'étiquettes ;

— la Fig. 3 montre des diagrammes de propagation de paquets dans le premier bus de transmission de paquets ;

— la Fig. 4 est un bloc diagramme de l'allocateur du système ;

— la Fig. 5 montre des diagrammes temporels de différents signaux produits par l'allocateur ;

— la Fig. 6 est un bloc diagramme d'un paqueteur-multiplexeur pour raccorder une source aux deux bus du système ; et

— la Fig. 7 montre des diagrammes temporels de différents signaux produits par le paqueteur-multiplexeur.

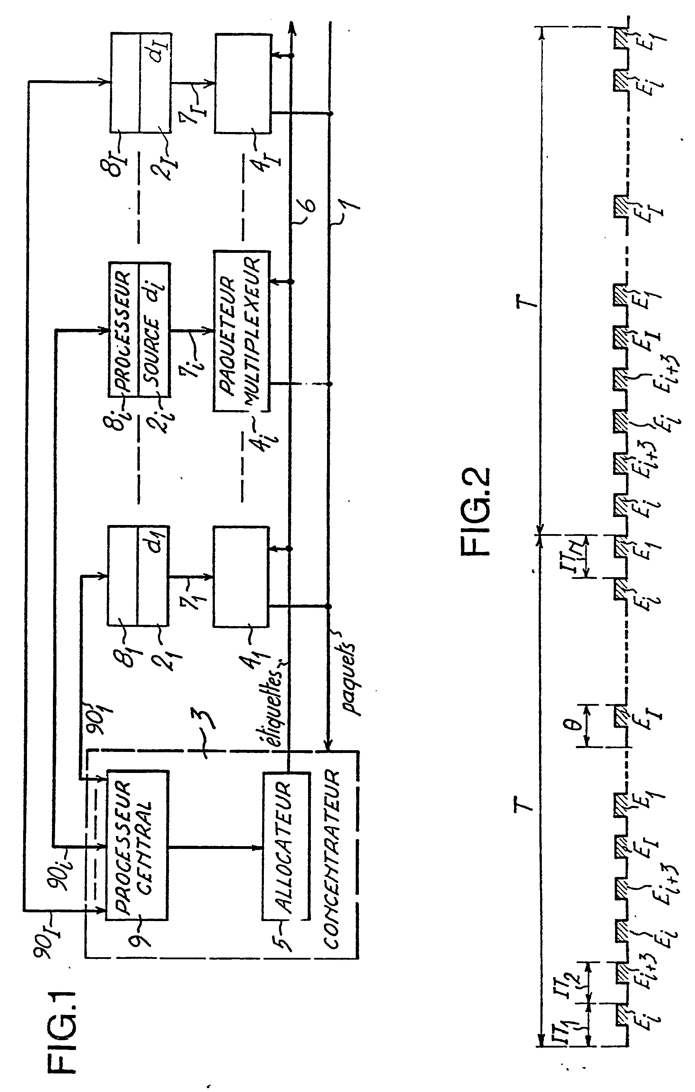

En référence à la Fig. 1, le système de multiplexage numérique temporel asynchrone comprend un bus unidirectionnel 1 pour la transmission distribuée de paquets de données à partir de sources de données $2_1$ à $2_I$ vers un concentrateur de données 3 relié à un réseau de commutation temporel asynchrone. Chaque source est raccordée au bus 1 à travers un paqueteur-multiplexeur $4_1$ à $4_I$. Chaque paqueteur-multiplexeur $4_1$ à $4_I$ est autorisé à transmettre un paquet de données dans le bus 1 sous la commande d'un allocateur 5 du concentrateur 3 par l'intermédiaire d'un bus unidirectionnel 6 distribué sur chacun des paqueteurs-multiplexeurs.

Les sources $2_1$ à $2_I$ transmettent respectivement

des données vers les paqueteurs-multiplexeurs $4_1$ à $4_I$ à travers des voies numériques $7_1$ à $7_I$ ayant des débits $d_1$ à $d_I$. Les débits $d_1$ à $d_I$ sont différents entre eux en général, et sont compris entre un débit minimal $d_m$ et un débit maximal $d_M$. Les sources $2_1$ à $2_I$ sont associées respective- ment à des processeurs de commande $8_1$ à $8_I$ qui permettent de signaler à un processeur central 9 inclus dans le concentrateur 3 les activations des sources. Le processeur central 9 est relié aux processeurs $8_1$ à $8_I$ à travers un réseau étoilé de liaisons bidirectionnelles $90_1$ à $90_I$ dans lequel transitent les différents signaux de signalisation entre chaque source et le processeur 9 afin que la source demande l'accès au bus 1 pour transmettre des données et signale ainsi son activation au début d'une communication ou afin que la source signale sa désactivation à la fin d'une communication. Les signaux de signalisation sont transmis par exemple selon un protocole connu d'échange de paquets à haut débit du type HDLC à travers le réseau étoilé. Dans la suite, on considère le fonctionnement des sources actives après l'échange de signaux de signalisation au début d'une communication. A un instant donné, des sources sont actives et d'autres sources sont inactives.

Chacun des paqueteurs-multiplexeurs $4_1$ à $4_I$ reliés à une source active $2_1$ à $2_I$ rassemble en paquets $P_1$ à $P_I$ le signal numérique transmis par la voie numérique $7_1$ à $7_I$ de la source active $2_1$ à $2_I$. Chaque paquet $P_1$ à $P_I$ à transmettre dans le bus 1 est constitué d'un bloc ayant un nombre prédéterminé de bits $b = k \times e$ où k est un entier et d'une étiquette $E_1$ à $E_I$ de source ayant e bits précédant le bloc. Une étiquette $E_i$ est un mot binaire représentatif du numéro i de la source $S_i$, où i varie de 1 à I. Le bus 1 transporte en mode asynchrone les paquets multiplexés dans le temps délivrés par des paqueteurs-multiplexeurs associés à plusieurs sources actives simultanément ayant reçu une autorisation d'émettre de l'allocateur 5 à travers le bus d'allocation 6.

Comme montré à la Fig. 2, le bus 6 transporte une trame périodique ayant une durée T et partagé en N intervalles temporels $IT_1$ à $IT_N$ ayant chacun une durée égale à $\theta$. Chaque intervalle IT est propre à transmettre une étiquette E. Les étiquettes E sont multiplexées dans la trame T par l'allocateur 5 en fonction des débits $d_1$ à $d_I$ des sources actives.

Le débit minimal $d_m$ et le débit maximal $d_M$ des sources, ainsi que les paramètres temporels $\theta$ et T de la trame sont déterminés en fonction des caractéristiques de transmission du bus de transmission de paquets 1 et des nombres de bits e et b. Les caractéristiques du bus 1 sont les suivantes :

— longueur L des bus 1 et 6 entre le paqueteur- multiplexeur $4_1$ le plus proche du concentrateur 3 et le paqueteur-multiplexeur $4_I$ le plus éloigné du concentrateur 3 ;

— débit réel D du bus 1 nettement supérieur au débit maximal $d_M$ afin que le bus 1 puisse transporter des paquets provenant au moins d'une source ayant le débit maximal $d_M$ ;

— $\tau$ = temps unitaire de propagation dans les bus 1 et 6.

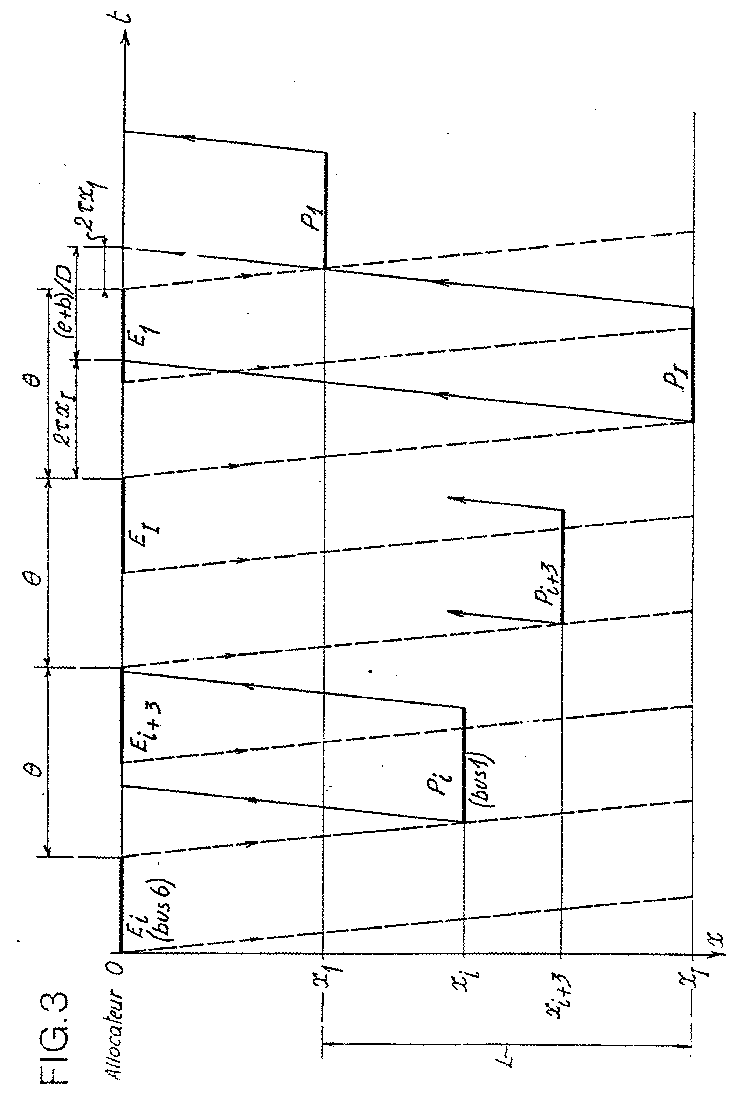

Dans la Fig. 3 est présenté le diagramme de propagation de paquets provenant de quatre paqueteurs-multiplexeurs $4_i$, $4_{i+3}$, $4_I$ et $4_1$ qui sont autorisés à insérer des paquets dans le bus 1 selon l'ordre indiqué dans la trame formée par l'allocateur 5 et montrée à la Fig. 2. L'ordre des autorisations est le suivant : ... i, i + 3, I, 1 ... Si $x_i$ désigne la distance entre l'allocateur 5 et le paqueteur-multiplexeur $4_i$, la procédure de trans- mission d'un paquet $P_i$ à partir du paqueteur- multiplexeur $4_i$ débute par la transmission de l'étiquette $E_i$ sur le bus 6 pendant un temps de propagation $\tau x_i$ puis finit par la transmission du paquet $P_i$ délivré par le paqueteur-multiplexeur $4_i$ sur le bus 1 pendant un temps de propagation $\tau x_i$.

Pour que l'allocateur 5 autorise successivement la transmission de paquets à partir de paque- teurs-multiplexeurs quelconques sans chevau- chement de paquets, la durée d'allocation et de transmission de paquet $\theta$ est choisie pour le cas le plus défavorable selon lequel la transmission d'un paquet $P_I$ issu du paqueteur-multiplexeur $4_I$ le plus éloigné (distance $x_I$) du concentrateur 3 est suivie par la transmission d'un paquet $P_1$ issu du paqueteur-multiplexeur $4_1$ le plus proche (dis- tance $x_1$) du concentrateur 3. Pour recevoir suc- cessivement les paquets $P_I$ et $P_1$ sans temps mort, ni chevauchement, la relation

$$\theta = 2\tau x_I + (e + b)/D - 2\tau x_1$$

doit être satisfaite. La relation précédente est déduite d'une analyse du diagramme de la partie de droite de la Fig. 3. La relation précédente s'écrit encore

$$\theta = 2\tau(x_I - x_1) + (e + b)/D.$$

La durée $\theta$ ne dépend donc pas de la longueur totale des bus 1 et 6 mais dépend de la distance $L = x_I - x_1$ entre les paqueteur-multiplexeurs $4_1$ et $4_I$ aux extrémités.

Le temps mort $2\tau L$ dans la durée d'allocation pendant lequel un paqueteur-multiplexeur ne transmet aucun signal numérique, est indépendant du débit réel D sur le bus 1, ce qui permet de concevoir des paqueteurs-multiplexeurs distribués ayant un débit très élevé et utilisant des paquets courts. La faible longueur des paquets permet l'emploi de mémoire tampon ayant une faible capacité.

Sachant qu'un seul paquet à la fois ne peut être transmis dans un intervalle $\theta$, le débit maximal $d_M$ des sources est donc égal à $b/\theta$. A contrario, pour qu'un paqueteur-multiplexeur délivre seulement un paquet pendant la durée de trame T, il faut que le débit minimal $d_m$ de la source correspondante soit égal à $b/T = b/(N\theta)$. Pour une source ayant un débit $d_i$ compris entre le débit minimal $d_m$ et le débit maximal $d_M$, l'étiquette correspondante $E_i$ est répétée périodiquement ou non dans la trame T un nombre de fois $n_i$ tel que :

$n_i = d_i/d_m$ si le rapport $d_i/d_m$ est un nombre entier ;

ou $n_i$ = (partie entière de $(d_i/d_m)$) + 1 si le rapport $d_i/d_m$ n'est pas un nombre entier.

Dans le cas où le rapport $d_i/d_m$ n'est pas un nombre entier, le dernier paquet autorisé à être transmis dans la trame T du bus 1 par le paqueteur-multiplexeur correspondant comprend un nombre de bits inférieurs à p = e + b et peut être transmis tel quel avec des bits de bourrage selon un procédé connu, ou peut être transmis avec une partie du bloc suivant au début de la trame suivante comme on le verra au cours de la description d'un paqueteur-multiplexeur.

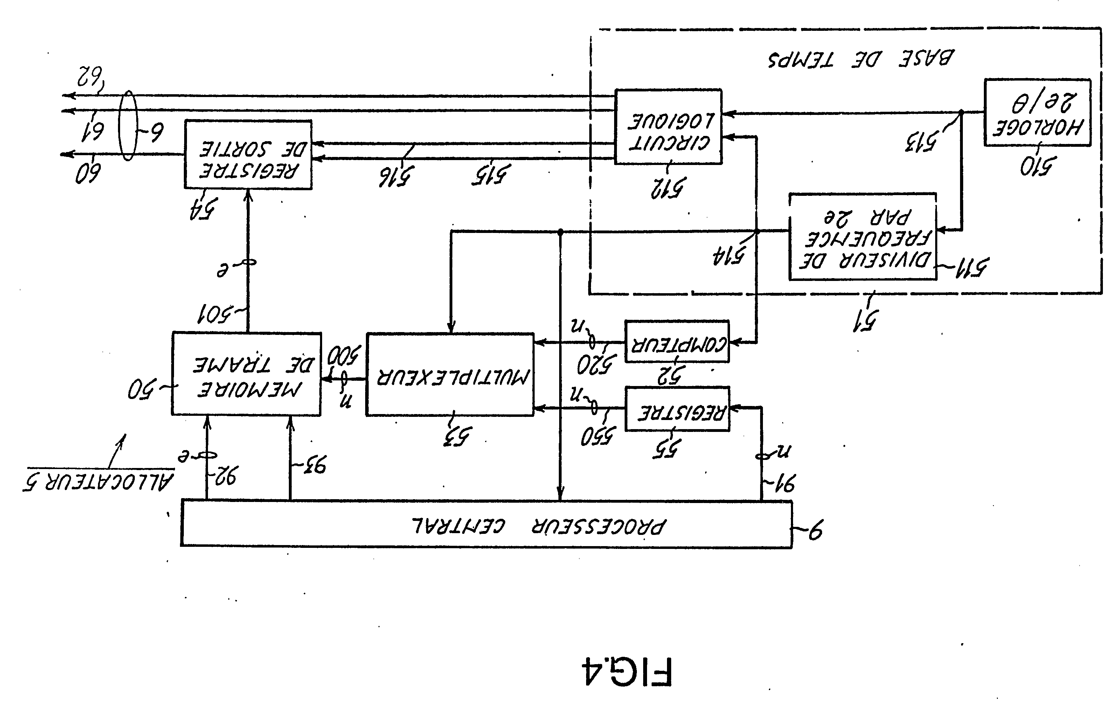

En se référant maintenant à la Fig. 4, l'allocateur 5 comprend une mémoire à accès aléatoire 50 du type RAM. La mémoire 50 contient N cellules à e bits chacune, pour mémoriser les N mots d'étiquettes inclus dans une trame T. L'allocateur 5 comprend également une base de temps 51 ainsi que des moyens pour écrire les étiquettes associées aux paqueteurs-multiplexeurs autorisés à transmettre des paquets dans le bus 1 sous la commande du processeur central 9, et des moyens pour lire les étiquettes écrites dans la mémoire 50 sous la commande de la base de temps en vue de transmettre une trame d'étiquettes dans le bus d'allocation 6. Le bus 6 est composé de trois lignes numériques 60, 61 et 62. La ligne 60 transmet les trames d'étiquettes. La ligne 61 transmet un signal de présence d'allocation synchrone avec les étiquettes de trames. La ligne 62 transmet un signal d'horloge au rythme des bits des étiquettes dans la ligne 60.

La base de temps 51 contient une horloge 510, un diviseur de fréquence 511 par 2e et un circuit logique 512.

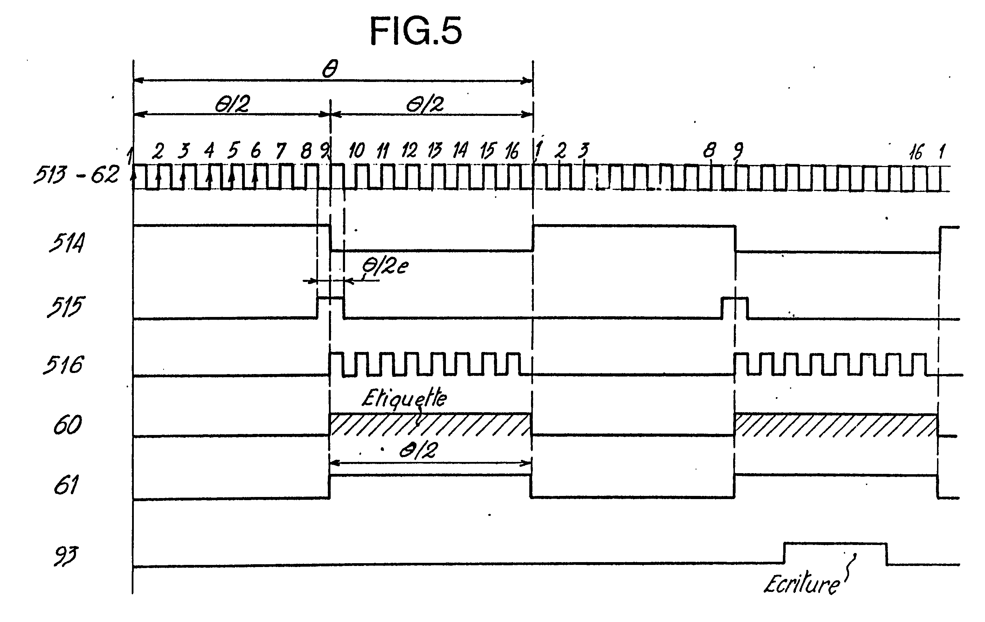

La sortie 513 de l'horloge 510 délivre un signal d'horloge à la fréquence 2e/θ des bits d'étiquette dans la ligne de transmission 60. La sortie d'horloge 513 est reliée à l'entrée du diviseur de fréquence 511 et à une entrée du circuit logique 512. La sortie 514 du diviseur de fréquence 511 délivre un signal à la fréquence d'allocation 1/θ. Les signaux aux sorties 513 et 514 sont montrés dans les deux premiers diagrammes temporels de la Fig. 5. La première demi-période de chaque période θ du signal à la sortie 514 est propre systématiquement à l'adressage en lecture de la mémoire 50 et au transfert de l'information disponible dans un registre de sortie 54 en fin de demi-période. La seconde demi-période de chaque période θ est propre, le cas échéant, à l'adressage en écriture et à l'écriture d'une étiquette dans la mémoire 50. L'accès à la mémoire 50 est à cet effet synchronisé alternativement en lecture et écriture par le signal à la sortie 514 du diviseur de fréquence 511.

La sortie 514 du diviseur 511 est reliée à une entrée de comptage d'un compteur 52, à une entrée de sélection d'entrées d'un multiplexeur à deux entrées 53 et à une entrée du circuit logique 512. Le compteur 52 a un cycle égal au nombre N d'intervalles IT dans la trame T, N étant choisi égal à une puissance de 2. Un bus de sortie 520 du compteur ayant n = $\log_2$ N fils fournit les adresses de lecture des cellules contenant les étiquettes successives dans la trame T à l'une des deux entrées du multiplexeur 53 qui les transmet à une entrée d'adresse 500 de la mémoire 50 pendant les premières demi-périodes des périodes θ de la trame. Une impulsion de chargement montrée dans le troisième diagramme temporel de la Fig. 5 marque la transition entre les première et seconde demi-périodes de chaque période θ. Chaque impulsion de chargement a une longueur égale à θ/2e. L'impulsion de chargement est fournie par une sortie 515 du circuit logique 512 à une entrée du registre de sortie 54 et ordonne dans le registre de sortie 54 le chargement de l'étiquette adressée en lecture dans la mémoire 50, à travers un bus de sortie à e fils 501 de la mémoire 50.

Le circuit logique 512 fournit également un signal d'allocation sur la ligne 61, un signal d'horloge sur la ligne 62 et un signal d'horloge sur une sortie 516 pour le transfert en série de l'étiquette à partir du registre 54 vers la ligne 60. Les signaux à la sortie 516 et sur les lignes 60, 61 et 62 sont montrées respectivement dans les quatrième, cinquième, sixième et premier diagrammes temporels de la Fig. 5. Les signaux à la sortie 516 et dans la ligne 62 sont issus du signal d'horloge à la sortie 513 de l'horloge. Le signal d'allocation dans la ligne 61 est composé de créneaux ayant une largeur de θ/2 et encadrant les étiquettes dans la ligne 60.

L'opération d'écriture d'une étiquette dans la mémoire 50 est décidée par le processeur central 9 lorsque celui-ci a reçu une demande de connexion ou une demande de déconnexion de la source correspondante à travers la liaison respective du réseau étoilé $90_1$ à $90_i$.

Une demande de connexion d'une source $8_i$ au débit $d_i$ consiste pour le processeur central 9 à écrire $n_i$ fois dans la mémoire 50, l'étiquette $E_i$ de la source $8_i$ dans $n_i$ mots libres, correspondant donc à des intervalles temporels IT libres de la trame T. Lorsque le processeur 9 ne trouve pas un nombre suffisant de mots disponibles, il refuse la demande de connexion.

A l'inverse, une demande de déconnexion de la source $8_i$ consiste à effacer dans la mémoire 50 les mots affectés à la source qui sont alors remplacés chacun par un mot prédéterminé, ne contenant par exemple que des bits zéros, différent de tous les mots d'étiquette $E_1$ à $E_i$.

Pour éviter au processeur 9 d'accéder à la mémoire 50 en lecture, la recherche des mots libres pour une connexion ou des mots à effacer pour une déconnexion est effectuée dans une mémoire image de la mémoire 50, localisée dans le processeur 9. Les modifications de ladite mémoire image sont transférées dans la mémoire 50. A un instant donné, certains intervalles temporels IT de la trame T peuvent transporter le mot prédéterminé pour lequel aucun paqueteur-multiplexeur n'est programmé.

Les adresses d'écriture des cellules dans la mémoire 50 sont appliquées sélectivement à l'entrée d'adresse 500 de la mémoire 50 par une sortie à n fils 91 du processeur 9 à travers un registre tampon 55, un second bus d'entrée 550 du multiplexeur 53 et le multiplexeur 53. Le processeur 9 dispose du signal de synchronisation délivré par la sortie 514 du diviseur de fréquence 511. Au cours de la première demi-période d'une période $\theta$, le processeur charge le registre 55 avec l'adresse d'écriture, à l'occasion de la préparation d'un cycle d'écriture. Pendant la seconde demi-période de la période $\theta$, l'adresse d'écriture est présentée à la mémoire 50, via le multiplexeur 53. L'étiquette à écrire est fournie par le processeur central 9 à la mémoire 50 à travers un bus à e fils 92. Un signal d'écriture dans la mémoire 50 est fourni par une liaison 93 au milieu de la seconde demi-période de la période $\theta$. Le signal sur la liaison 93 est représenté dans le dernier diagramme temporel de la Fig. 5.

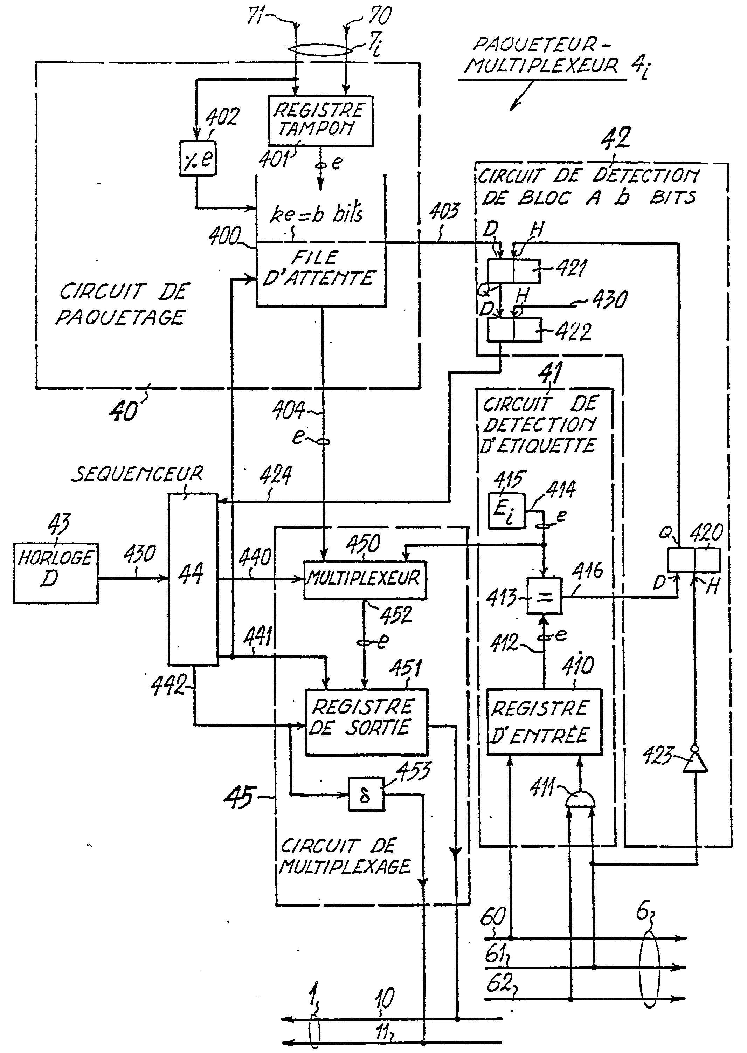

Un paqueteur-multiplexeur $4_i$ relié à la source correspondante $2_i$ à travers la voie numérique $7_i$ est montré en détail à la Fig. 6. La voie $7_i$ est composée d'une ligne numérique 70 transmettant un signal de données au débit $d_i$ et d'une ligne numérique 71 transmettant un signal d'horloge à la fréquence $d_i$.

Le paqueteur-multiplexeur $4_i$ comprend un circuit de paquetage 40 pour paqueter les bits transmis par la ligne 70 en des blocs de $k \times e = b$ bits. Le circuit 40 comprend une file d'attente 400 du type FIFO qui reçoit des mots à e bits mis en parallèle par un registre tampon 401 relié à la voie $7_i$. L'écriture dans la file 400 est rythmée par un signal d'écriture à la fréquence $d_i/e$ fourni par un diviseur de fréquence 402 par e relié à la ligne 71.

Du côté du bus de distribution d'étiquettes 6, le paqueteur-multiplexeur $4_i$ comprend un circuit de détection de l'étiquette $E_i$ assignée à la source $2_i$ et un circuit de détection de bloc.

Le circuit de détection d'étiquette 41 comprend un registre d'entrée 410 à e étages qui mémorise successivement les étiquettes de trame délivrées par· la ligne 60 du bus 6. Les étiquettes sont écrites au rythme du signal d'horloge sur la ligne 62 pendant les durées d'allocation $\theta/2$ fournies par le signal d'allocation sur la ligne 61, au moyen d'une porte ET 411. Les étiquettes dans la ligne 60 sont délivrées par un bus de sortie à e fils 412 du registre 410 et sont appliquées à une première entrée d'un comparateur numérique 413. Une seconde entrée du comparateur 413 est reliée au bus de sortie à e fils 414 d'un registre 415, tel qu'une mémoire morte REPROM ayant mémorisée l'étiquette $E_i$. Lorsque les contenus des registres 410 et 415 sont égaux, la sortie 416 du comparateur 413 est à l'état « 1 », ce qui signale qu'un paquet à $p = b + e$ bits peut être introduit dans le bus 1.

Le circuit de détection de bloc 42 détecte la mémorisation de k mots à e bits chacun et donc la formation d'un bloc à b bits dans la file 400 et signale qu'un tel bloc peut être transmis dans le bus 1 en réponse à la détection d'une étiquette $E_i$ dans le bus 6. Le circuit 42 comprend trois bascules 420, 421 et 422 qui changent d'état sous la commande de fronts montants appliqués sur leurs entrées d'horloge.

L'entrée de données D et l'entrée d'horloge H de la première bascule 420 sont reliées respectivement à la sortie 416 du comparateur 413 et à la ligne 61 à travers un inverseur 423. L'entrée D et l'entrée d'horloge H de la seconde bascule 421 sont reliées respectivement à une borne de sortie particulière 403 de la file 400 et à la sortie Q de la bascule 420. La borne 403 est au niveau « 1 » lorsque la file 400 contient au moins b bits. L'entrée D et l'entrée d'horloge H de la troisième bascule 422 sont reliées respectivement à la sortie Q de la bascule 421 et à une sortie 430 d'une horloge 43 contenue dans le paqueteur-multiplexeur $4_i$. Le signal d'horloge 430 est à la fréquence D égale au débit réel des bits dans le bus 1.

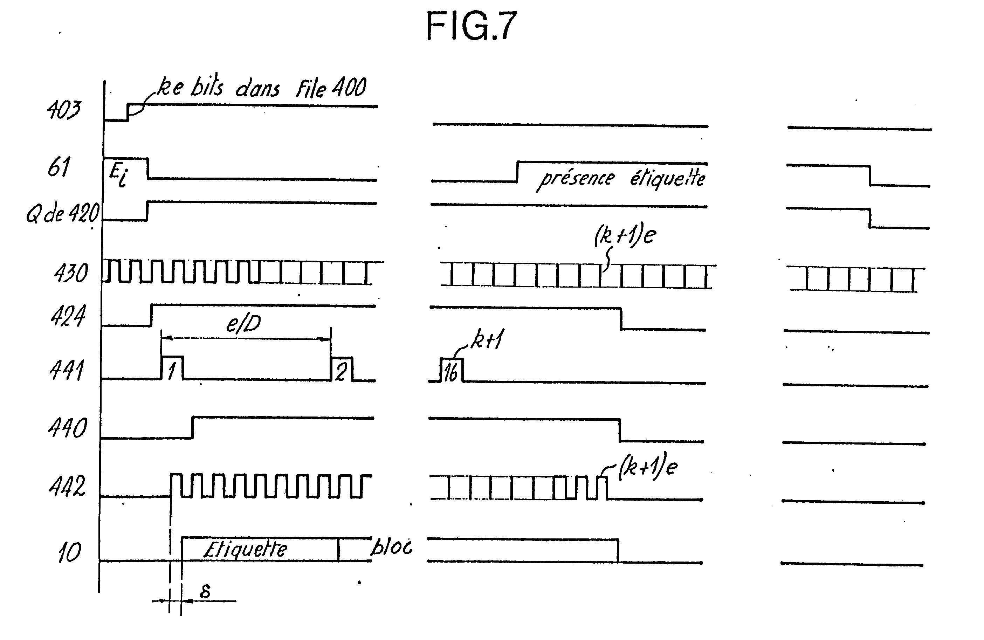

Les signaux à la sortie 403 de la file 400, dans la ligne 61, à la sortie Q de la bascule 420, à la sortie 430 de l'horloge 43 et à la sortie 424 de la bascule 422 sont montrés dans les cinq premiers diagrammes temporels de la Fig. 7, lorsqu'une étiquette $E_i$ est détectée après qu'un bloc de b bits ait été enregistré dans la file 400. Le signal à la sortie 424 de la bascule 422 indique la présence d'au moins b bits dans la file 400 et l'allocation d'un intervalle de temps $\theta$ dans le bus 1 pour introduire un bloc de b bits. L'introduction du bloc dans le bus 1 est commandée par un séquenceur 44 à travers un circuit de multiplexage 45 inclus dans le paqueteur-multiplexeur $4_i$, dès le déclenchement du séquenceur 44 par le signal en sortie 424 de la bascule 422.

Le circuit de multiplexage 45 comprend essentiellement un multiplexeur 450 ayant deux bus d'entrée à e fils chacun et un registre de sortie à e étages 451 relié au bus de sortie à e fils 452 du multiplexeur 450. En réponse au signal de déclenchement à la sortie 424 de la troisième bascule 422, le séquenceur 44 commande via un conducteur 440 à l'état « 0 » la sélection d'un premier bus d'entrée du multiplexeur 450 relié à la sortie 414 du registre 415 de l'étiquette $E_i$ afin que l'étiquette $E_i$ soit chargée dans le registre de sortie 451 sous la commande d'une première impulsion de chargement sur un conducteur 441. Puis les k mots à e bits « localisés » au fond de la pile 400 sont lus successivement par le séquenceur 44. Le séquenceur commande, via le conducteur 440 à l'état « 1 », la sélection d'un second bus d'entrée du multiplexeur 450 relié au bus de sortie à e fils 404 de la pile 400 afin que les k mots à e bits soient chargés successivement dans le registre de sortie 451 sous la commande de k impulsions de chargement sur le conducteur 441. Les impulsions de chargement ont une largeur égale à l/D et sont délivrées à une période égale à e/D. Les $(k + 1)$ mots à e bits ainsi lus sont transmis en série sur une ligne numérique 10 du bus 1 par la sortie du registre 451 rythmé par un signal d'horloge sur un conducteur 442 comportant $(k + 1)e$ impulsions à même fréquence que celle du signal d'horloge 43 et débutant une période d'horloge après la montée du signal à la

sortie 424 de la bascule 422. Le signal d'horloge de décalage sur le conducteur 442 est retardé par un circuit à retard 453, de la valeur $\delta$ du temps de positionnement d'un étage du registre 451 et est transmis sur une ligne numérique 11 du bus 1 en synchronisme avec les $(k + 1)e$ bits du paquet transmis sur la ligne 10. Les signaux sur les conducteurs 441, 440 et 442 et sur la ligne 10 sont montrés dans les quatre dernières lignes de la Fig. 7.

Lorsque le comparateur 413 a détecté une étiquette $E_i$ dans la ligne 60 et que le fond de la file 400 contient un nombre de mots à e bits inférieur à k, aucun signal de déclenchement du séquenceur 44 n'est fourni par la sortie 424 de la troisième bascule 422. Cette condition est due par exemple à une période de non transmission momentanée de données par la source $2_i$ sur la ligne 70 ou, d'une manière générale, à un asynchronisme entre la transmission des étiquettes $E_i$ dans la ligne 60 et l'apparition de ke bits dans la file 400. Entre la détection de l'étiquette précédente $E_i$ ne déclenchant pas le séquenceur et la détection de l'étiquette suivante $E_i$ dans la ligne 60, le niveau de ke bits dans la file 400 peut être dépassé. Il faut donc que la capacité de la file soit supérieure à ke = b bits.

Dans le cas où les autorisations d'accès au bus 1, c'est-à-dire les étiquettes $E_i$, sont émises dans le bus 6 d'une manière rigoureusement périodique et que le nombre d'étiquettes $E_i$ par trame T est strictement égal à $d_i/d_m$, un déphasage constant existe entre les comparaisons positives dans le comparateur 413 et la mémorisation de ke bits dans la file 400. Au pire, le déphasage peut être égal à la durée d'un bloc. La capacité de la file 400 est donc au moins égale à $2b = 2$ ke bits. En pratique, la capacité de la file 400 est choisie supérieure à 2b bits afin d'assouplir la structuration de la trame et, en particulier, afin d'autoriser une répartition non périodique des étiquettes à l'intérieur de la trame, comme indiqué par l'étiquette $E_{i+3}$ dans les trames de la Fig. 2.

Le système de multiplexage numérique temporel asynchrone à bus distribué selon l'invention est destiné notamment à un réseau local d'entreprise ou d'une installation d'un abonné à raccorder à un réseau numérique à intégration de services (RNIS) à travers le concentrateur 3. Chaque source constitue des moyens d'émission de données inclus dans un terminal du réseau local. Le débit de chaque source peut être :

— égal à quelques kbit/s pour des données de télécopie par exemple ; ou

— compris entre 64 kbit/s et 1 M bit/s pour la transmission numérique de son à moyenne ou haute fréquence ; ou

— de l'ordre de 100 M bit/s pour la transmission d'images animées.

Selon un exemple particulier de réalisation, les valeurs de paramètres définies dans la description ci-dessus sont :

— longueur $L = x_i - x_1 = 50$ mètres ;

— débit réel D du bus 1 = 250 M bit/s ;

— temps unitaire de propagation $\tau$ dans les bus 1 et 6 = 5 ns/m ;

— nombre e de bits par étiquette = 8 bits ;

— nombre de bits ke par bloc : $b = ke = 15 \times 8 = 120$ bits ;

— nombre de bits par paquet : $p = e + ke = 128$ bits ;

— durée d'allocation $\theta = 1$ µs ;

— nombre N d'intervalle IT dans une trame : $2^n = 2^{14} = 8\,192$ ;

— débit maximal $d_M$ de source = $b/\theta = 120$ M bit/s ;

— débit minimal $d_m$ de source = $b/(N\theta) = 14,6$ k bit/s.

## Revendications

1. Système de multiplexage numérique temporel asynchrone comprenant un premier bus unidirectionnel (1) ayant un débit prédéterminé D pour transmettre des paquets incluant chacun une étiquette de source $(E_i)$ ayant e bits et un bloc ayant b bits de source, plusieurs sources $(2_i)$ délivrant respectivement des signaux numériques $(7_i)$ ayant des débits différents $(d_i)$ compris entre un débit minimal $d_m$ et un débit maximal $d_M$ inférieur au débit prédéterminé D du premier bus, et plusieurs moyens d'accès $(4_i)$ raccordant les sources $(2_i)$ le long du premier bus (1) pour introduire des paquets dans le premier bus à partir des sources respectivement, caractérisé en ce qu'il comprend des moyens d'allocation (5) localisés à l'extrémité de réception (3) du premier bus (1) pour constituer des trames d'étiquettes $(E_i)$ identifiant des sources $(2_i)$, chaque trame ayant une durée T égale à $b/d_m$ et étant partagée en un nombre N d'intervalles temporels (IT) égal à $d_M/d_m$, chaque intervalle temporel ayant une durée $\theta$ égale à $b/d_M$ et incluant une étiquette de source, chaque étiquette d'une même source ayant un débit $d_i$ étant répétée périodiquement ou non dans la trame T un nombre de fois $n_i$ tel que $n_i = d_i/d_m$ lorsque le rapport $d_i/d_m$ est un nombre entier ou tel que $n_i = 1 +$ partie entière de $(d_i/d_m)$ lorsque le rapport $d_i/d_m$ n'est pas un nombre entier, en ce que les trames d'étiquettes sont transmises par les moyens d'allocation (5) dans un second bus unidirectionnel (6) distribué à tous les moyens d'accès $(4_i)$ et en ce que le moyen d'accès $(4_i)$ de chaque source $(2_i)$ transmet un paquet dans le premier bus (1) chaque fois qu'un bloc de b bits provenant de la source $(2_i)$ est reçu et qu'une étiquette $(E_i)$ assignée à la source $(2_i)$ est détectée dans le second bus (6) après la réception du bloc.

2. Système conforme à la revendication 1, caractérisé en ce que la durée $\theta$ des intervalles de temps (IT) dans les trames (T) est égale à $(e + b)/D$ augmentée d'une durée égale à deux fois le temps de propagation $(\tau L)$ dans le premier et le second bus (1, 6) entre le moyen d'accès $(4_1)$ le plus proche des moyens d'allocation (5) et le moyen d'accès $(4_i)$ le plus éloigné des moyens d'allocation (5).

3. Système conforme à la revendication 1 ou 2, caractérisé en ce que le moyen d'accès ($4_i$) de chaque source ($2_i$) comprend des moyens (41) pour détecter l'étiquette ($E_i$) de la source ($2_i$) dans le second bus (6), des moyens (40) pour paqueter les bits délivrés au fur et à mesure par la source ($2_i$) en des blocs de b bits, des moyens (42) pour détecter la formation d'un bloc (b) afin de délivrer un signal de déclenchement (424) en réponse à la détection d'une étiquette ($E_i$) de la source succédant à la formation d'un bloc, et des moyens (44, 45) pour transmettre un paquet constitué par l'étiquette de la source et le bloc détecté dans le premier bus (1) en réponse au signal de déclenchement (424).

4. Système conforme à la revendication 3, caractérisé en ce que les moyens pour paqueter (40) dans le moyen d'accès ($4_i$) comprennent une file du type FIFO (400) ayant une capacité au moins égale à 2b bits.

5. Système conforme à l'une quelconque des revendications 1 à 4, caractérisé en ce que les moyens d'allocation (3) comprennent une mémoire (50) pour mémoriser à N adresses des étiquettes ($E_i$) constituant une trame (T), des moyens (51, 52, 53) pour fournir systématiquement N adresses de lecture des étiquettes mémorisées pendant les premières demi-périodes des périodes θ de la trame afin d'introduire les étiquettes lues ($E_i$) dans le second bus (6) pendant les secondes demi-périodes des périodes θ respectivement, et des moyens (9, 53, 55, 56) pour fournir sélectivement une adresse d'écriture d'étiquette pendant l'une des secondes demi-périodes des périodes θ afin d'écrire dans la mémoire (50) l'étiquette pendant la seconde demi-période de la période θ suivante.

6. Système conforme à la revendication 5, caractérisé en ce que le second bus (6) comprend en outre une ligne numérique (61) pour transmettre des créneaux synchrones avec les étiquettes ($E_i$) de trame (T) transmises pendant les secondes demi-périodes des périodes θ, et délivrés par les moyens pour fournir les N adresses de lecture (51, 52, 53).

**Claims**

1. Asynchronous digital time-division multiplexing system comprising a first unidirectional bus (1) having a predetermined bit rate D for transmitting packets each including a source identifier ($E_i$) having e bits and a package having b source bits, plural sources ($2_i$) respectively delivering digital signals ($7_i$) having different bit rates ($d_i$) lying between a minimum bit rate $d_m$ and a maximum bit rate $d_M$ less than the predetermined bit rate D in the first bus, and plural access means ($4_i$) linking the sources ($2_i$) along the first bus (1) for introducing packets into the first bus from the sources respectively, characterized in that it comprises allocating means (5) located at the receiving end (3) of the first bus (1) for constituting frames of identifiers ($E_i$) identifying sources ($2_i$), each frame having a duration T equal to $b/d_m$ and being split into a number N of time slots (IT) equal to $d_M/d_m$, each time slot having a duration θ equal to $b/d_M$ and including a source identifier, each identifier of a same source having a bit rate $d_i$ being repeated periodically or otherwise in the frame T a times number $n_i$ such that $n_i = d_i/d_m$ when the ratio $d_i/d_m$ is an integer, or such that $n_i = 1 +$ integer part of ($d_i/d_m$) when the ratio $d_i/d_m$ is not an integer, in that the identifier frames are transmitted from the allocating means (5) into a second unidirectional bus (6) distributed to all the access means ($4_i$) and in that the access means ($4_i$) of each source ($2_i$) transmits a packet into the first bus (1) whenever a b-bit package delivered from the source ($2_i$) is received and an identifier ($E_i$) allocated to the source ($2_i$) is detected in the second bus (6) after reception of the package.

2. System according to claim 1, characterized in that the duration θ of the time slots (IT) in the frames (T) is equal to (e + b)/D increased by a duration equal to twice the propagation time (τ L) in the first and the second buses (1, 6) between the access means ($4_1$) nearest the allocating means (5) and the access means ($4_i$) farthest the allocating means (5).

3. System according to claim 1 or 2, characterized in that the access means ($4_i$) of each source ($2_i$) comprises means (41) for detecting the identifier ($E_i$) of the source ($2_i$) in the second bus (6), means (40) for packetizing the bits delivered progressively by the source ($2_i$) into packages of b bits, means (42) for detecting the assembly of a package (b) in order to deliver a triggering signal (424) in response to the detection of a source identifier ($E_i$) following package assembly, and means (44, 45) for transmitting a packet made up of the source identifier and the detected package in the first bus (1) in response to the triggering signal (424).

4. System according to claim 3, characterized in that the packetizing means (40) in the access means ($4_i$) comprise an FIFO buffer (400) having a capacity equal at least to 2b bits.

5. System according to any one of claims 1 to 4, characterized in that the allocating means (3) comprise a memory (50) for storing identifiers ($E_i$) constituting a frame (T) at N addresses, means (51, 52, 53) for systematically providing N reading addresses of the stored identifiers during the first half-periods of periods θ of the frame so as to introduce the read identifiers ($E_i$) in the second bus (6) during the second half-periods of the periods θ respectively, and means (9, 53, 55, 56) for selectively providing an identifier writing address during one of the second half-periods of the periods θ so as to write the identifier in the memory (50) during the second half-period of the following period θ.

6. System according to claim 5, characterized in that the second bus (6) further comprises a digital line (61) for transmitting pulses synchronous with the frame (T) identifiers ($E_i$) transmitted during the second half-periods of the periods θ, and delivered from the N-reading address providing means (51, 52, 53).

## Patentansprüche

1. Asynchrones, digitales Zeit-Multiplexsystem mit einem ersten Einwegbus (1) mit einer vorgegebenen Bitrate D zur Paketübertragung, wobei jedes Paket eine e Bits und einen Block aus b Bits umfassende Quellenkennung ($E_i$) enthält, mit mehreren Quellen ($2_i$), die jeweils Digitalsignale ($7_i$) mit unterschiedlichen Bitraten ($d_i$) abgeben, wobei die unterschiedlichen Bitraten kleiner als die vorgegebene Bitrate D des ersten Busses sind und zwischen einer minimalen Bitrate $d_m$ und einer maximalen Bitrate $d_M$ liegen, sowie mit mehreren Zugriffseinrichtungen ($4_i$), welche die Quellen ($2_i$) über die Länge des ersten Busses (1) zur Einspeisung von von den Quellen ausgehenden Paketen in den ersten Bus verbinden, dadurch gekennzeichnet, daß Zuteilungseinrichtungen (5) am Empfangsende (3) des ersten Busses (1) zur Bildung der die Quellen ($2_i$) identifizierenden Kennungsrahmen ($E_i$) vorgesehen sind, wobei jeder Rahmen eine Zeitdauer T gleich $b/d_m$ aufweist und in eine Anzahl von N Zeitschlitzen (IT) gleich $d_M/d_m$ unterteilt ist, und wobei jeder Zeitschlitz eine Dauer θ gleich $b/d_M$ besitzt und eine Quellenkennung enthält, wobei ferner die Kennung ein und derselben Quelle eine Bitrate $d_i$ aufweist und in dem Rahmen T periodisch oder nicht periodisch eine Anzahl $n_i$ von Malen wiederholt wird, wobei $n_i = d_i/d_m$ ist, wenn das Verhältnis $d_i/d_m$ eine ganze Zahl ist, oder $n_i = 1 +$ ganzzahliger Anteil von $(d_i/d_m)$ ist, wenn das Verhältnis $d_i/d_m$ nicht ganzzahlig ist, und daß die Rahmen der Kennungen durch die Zuteilungseinrichtungen (5) in einem über alle Zugriffseinrichtungen ($4_i$) verteilten, zweiten Einwegbus (6) übertragen werden und daß die Zugriffseinrichtung ($4_i$) jeder Quelle ($2_i$) ein Paket in den ersten Bus (1) jedesmal dann überträgt, wenn ein aus der Quelle ($2_i$) hervorgehender Block von b Bits empfangen wird und wenn eine der Quelle ($2_i$) zugeteilte Kennung ($E_i$) im zweiten Bus (6) nach Empfang des Blocks festgestellt wird.

2. System nach Anspruch 1, dadurch gekennzeichnet, daß die Dauer θ der Zeitschlitze (IT) in den Rahmen (T) gleich $(e + b)/D$, erhöht um die zweifache Dauer der Ausbreitungszeit (τ L) im ersten und im zweiten Bus (1, 6) zwischen der den Zuteilungseinrichtungen (5) nächstliegenden Zugriffseinrichtung ($4_1$) und der zu den Zuteilungseinrichtungen (5) am weitesten entfernten Zugriffseinrichtung ($4_l$), ist.

3. System nach Anspruch 1 oder 2, dadurch gekennzeichnet, daß die Zugriffseinrichtung ($4_i$) jeder Quelle ($2_i$) Erkennungseinrichtungen (41) zur Feststellung der Kennung ($E_i$) der Quelle ($2_i$) in dem zweiten Bus (6) sowie Paketiereinrichtungen (41) zum Paketieren der Bits nach Maßgabe ihrer Anlieferung durch die Quelle ($2_i$) in Blocks von b Bits, Feststelleinrichtungen (42) zum Feststellen der Bildung eines Blockes (b) und zur Abgabe eines Auslösesignals (424) in Abhängigkeit von der Feststellung einer Kennung ($E_i$) der Quelle nach der Bildung eines Blockes, und Übertragungseinrichtungen (44, 45) zur Übertragung eines Pakets aufweist, welches von der Quellenkennung und dem in dem ersten Bus (1) festgestellten Block in Abhängigkeit vom Auslösesignal (424) gebildet ist.

4. System nach Anspruch 3, dadurch gekennzeichnet, daß die Paketiereinrichtungen (40) in der Zugriffseinrichtung ($4_i$) einen FIFO-Speicher (400) mit einer Kapazität von wenigstens 2b Bits enthalten.

5. System nach einem der Ansprüche 1 bis 4, dadurch gekennzeichnet, daß die Zuteilungseinrichtungen (3) einen Speicher (50) zum Abspeichern von N einen Rahmen (T) bildenden Kennungsadressen ($E_i$), Ausgabemittel (51, 52, 53) zur systematischen Ausgabe von N Leseadressen der während der ersten Halbperioden der Perioden θ des Rahmens gespeicherten Kennungen, um die gelesenen Kennungen ($E_i$) in den zweiten Bus (6) während der zweiten Halbperioden der Perioden θ einzufügen, sowie Ausgabeeinrichtungen (9, 53, 55, 56) enthalten, um wahlweise eine Schreibadresse der Kennung während einer der zweiten Halbperioden der Perioden θ zu liefern, um die Kennung während der zweiten Halbperiode der folgenden Periode θ in den Speicher (50) einzuschreiben.

6. System nach Anspruch 5, dadurch gekennzeichnet, daß der zweite Bus (6) eine weitere digitale Leitung (61) enthält, um mit den Kennungen ($E_i$) des Rahmens (T) synchrone Abtastsignale zu übertragen, welche Kennungen während der zweiten Halbperioden der Perioden θ übertragen und durch die Ausgabemittel (51, 52, 53) zur Abgabe der N Leseadressen abgegeben worden sind.

# FIG.1

PROCESSEUR CENTRAL

9

ALLOCATEUR

5

CONCENTRATEUR

3

$90_I$ $90_i$ $90'_1$

$8_1$ $2_1$ $d_1$

$7_1$

$4_1$

$8_i$ PROCESSEUR SOURCE $d_i$ $2_i$

$7_i$

PAQUETEUR MULTIPLEXEUR $4_i$

$8_I$ $2_I$ $d_I$

$7_I$

$4_I$

étiquettes

6

paquets

1

0 138 717

# FIG.2

FIG.3

# FIG.4

PROCESSEUR CENTRAL

9

91

n

55 REGISTRE

550 n

53 MULTIPLEXEUR

n 500

MEMOIRE DE TRAME

50

93

92 e

ALLOCATEUR 5

52 COMPTEUR

520 n

51

511 DIVISEUR DE FREQUENCE PAR 2e

514

501 e

510 HORLOGE 2e/θ

513

512 CIRCUIT LOGIQUE

515 516

54 REGISTRE DE SORTIE

60

6 61

62

BASE DE TEMPS

0 138 717

# FIG.5

Etiquette

Ecriture

513 - 62
514
515
516
60
61
93

0 138 717

**0 138 717**

FIG.7